## Europäisches Patentamt

## European Patent Office

## Office européen des brevets

(11) Publication number: **0 084 241**
**B1**

(12) **EUROPEAN PATENT SPECIFICATION**

(45) Date of publication of patent specification: **29.07.87**

(21) Application number: **82306729.3**

(22) Date of filing: **16.12.82**

(51) Int. Cl.⁴: **H 04 N 5/91**

(54) **Signal processing device and method for video tape recording.**

(30) Priority: **18.01.82 JP 4871/82**

(43) Date of publication of application:
**27.07.83 Bulletin 83/30**

(45) Publication of the grant of the patent:
**29.07.87 Bulletin 87/31**

(84) Designated Contracting States:
**DE GB**

(56) References cited:
**GB-A-2 055 501**
**US-A-3 963 865**
**US-A-4 163 253**

(73) Proprietor: **SHINANO KIKAKU KABUSHIKI KAISHA**
**34, Shinano-machi**
**Shinjuku-ku, Tokyo 160 (JP)**

(72) Inventor: **Kagota, Minoru**
**28-18, Katsunuma 1-chome**
**Oumeshi Tokyo (JP)**

(74) Representative: **Lloyd, Barry George William et al**
**Reddie & Grose 16 Theobalds Road**
**London WC1X 8PL (GB)**

Courier Press, Leamington Spa, England.

## Description

This invention relates to a method of recording a composite video signal, comprising the steps of separating the horizontal sync signals from the composite video signal, using the separated horizontal sync signals to generate pulses of a predetermined shape, each generated pulse of a predetermined shape being delayed so as to occur in the back porch associated with the respective horizontal sync signal, combining the delayed generated pulses with the composite video signal, and recording the combined signal.

The purpose of such a method, and apparatus for carrying out the method, is to prevent illegal copying. A method and apparatus of this type is described in US—A—4163253 which discloses a method and apparatus in which the delayed generated pulses are pulses having an amplitude substantially equal to the peak white level. The effect is that if the resultant combined signal is supplied to a conventional video signal recorder for re-recording, the peak white level pulses are detected by an automatic gain control detector which consequently acts on the controlled gain amplifier so as to substantially attenuate the combined signal being re-recorded. Not only does this cause the video signal thus re-recorded to be unacceptably weak, but in addition the signal to noise ratio for the re-recorded video signal is very poor. However, this known method and apparatus produces a combined signal which cannot be reproduced by all television receivers. In particular, a pedestal-clamped type of television receiver may not be able to reproduce the video signal because the short, high amplitude, delayed pulses interfere with the proper operation of circuitry.

The present invention is concerned with providing an improved method and apparatus which can provide combined signals acceptable to the pedestal-clamped type of television receiver, as well as to the other types of television receiver.

According to the present invention, a method of the type defined hereinbefore is characterised in that the generated pulses of predetermined shape comprises first impairing pulses each having a width greater than a predetermined portion of the back porch, and second impairing pulses each having a width not greater than the predetermined portion of the back porch and an area substantially equal to the area of one of said first impairing pulses, and the first or second impairing pulses are selectively combined with the composite video signal over predetermined time intervals.

The invention will now be described by way of example with reference to the accompanying drawings, in which:

Fig. 1 shows a block diagram showing an embodiment of the present invention;

Fig. 2(A) shows an example of the NTSC color video signals in a schematic form;

Figs. 2(B), (C), (D), (E), (F) and (G) each show a pulse wave form output from the component circuits of the embodiment of Fig. 1, particularly showing their relationships with time;

Fig. 3 shows an alternating switching pulse for gating the gates in Fig. 1.

Figs. 4(D) and (F) show pulse trains output from the gates in Fig. 1;

Figs. 5(E) and (G) show pulse trains output from the pulse-form shaping circuits in Fig. 1;

Fig. 6 shows a pulse train output from the OR-gate 14 in Fig. 1; and

Fig. 7 shows color video signals with the pulse train of Fig. 3 added thereon.

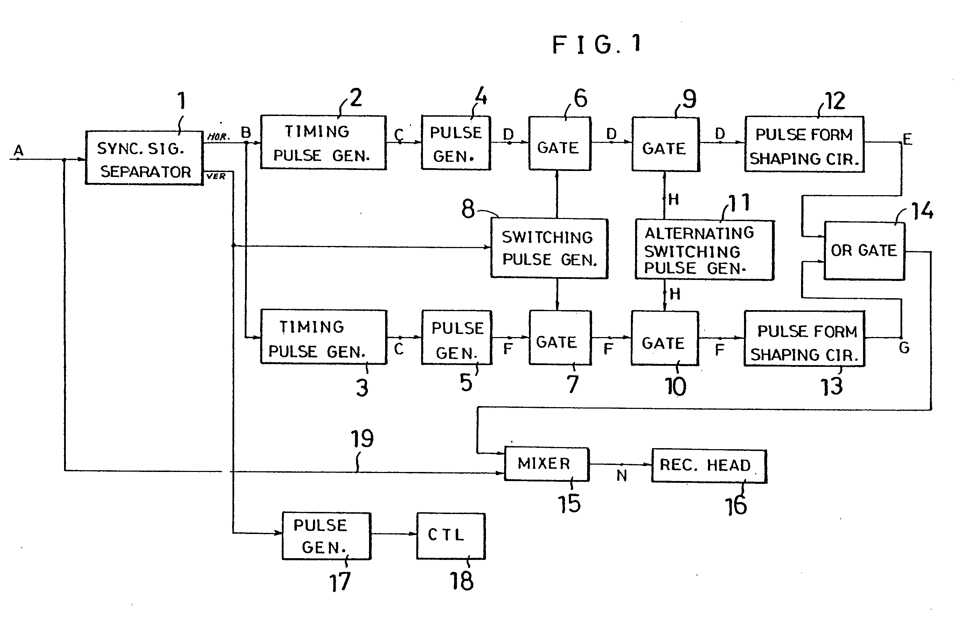

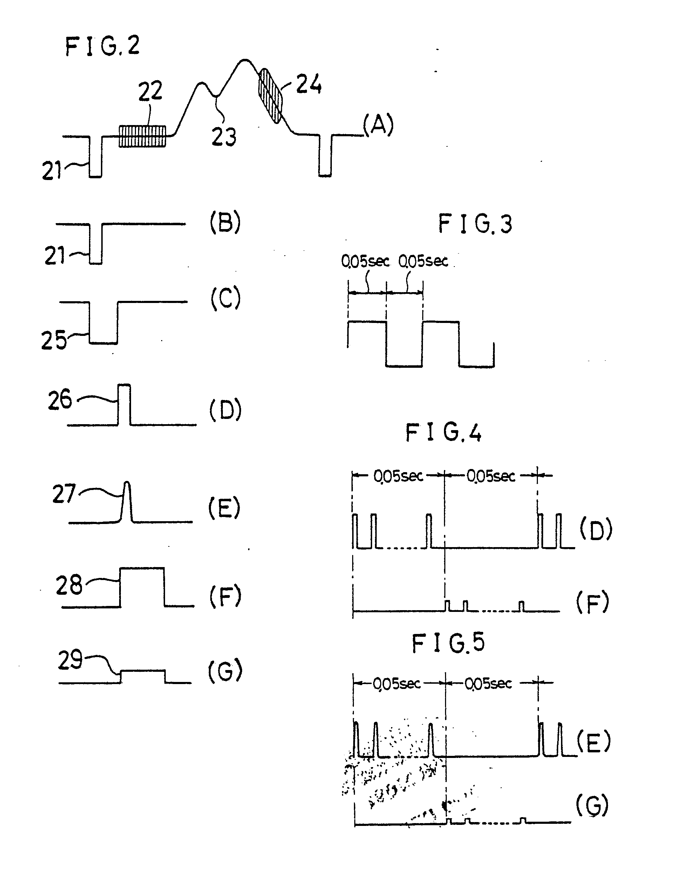

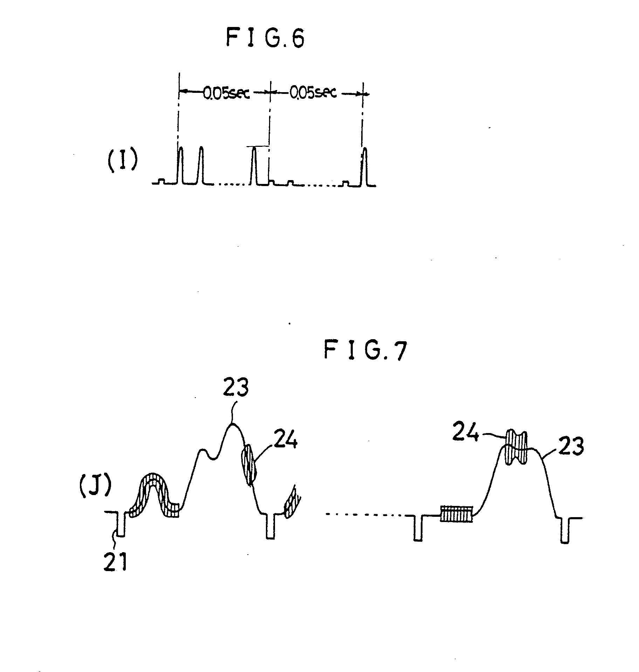

Referring to Fig. 1 the reference numeral 1 designates a synchronizing signal separator adapted to separate a horizontal sync signal and a vertical sync signal from an NTSC color video signal input thereto. The NTSC color video signal shown in Fig. 2(A) consists of a horizontal synchronizing signal 21, a color burst signal 22 and a luminance signal 23 with a chrominance signal 24 superposed thereon. The horizontal sync signal 21 output by the sync separator 1 is applied to two separate paths; one path leading to a timing pulse generator 2 and the other leading to a further timing generator 3, each of which generates a timing pulse 25 of the same form synchronously with the horizontal sync signal 21. As will be appreciated from Fig. 2(C), the timing pulse 25 has a sufficient width to reach the leading edge of the color burst signal 22. Triggered by the timing pulse 25 the pulse generators 4 and 5 generate a pulse 26 shown in Fig. 2(D) and a pulse 28 shown in Fig. 2(F), respectively. The pulse 26 has a wider width than the period of the frequency of the color burst signal 22, while the width of the pulse 28 covers the whole range of the color burst signal 22. These pulses 26 and 28 are then gated at their respective gate circuits 6 and 7 so as not to proceed when a vertical synchronizing signal is contained in a series of video signals, the gate circuits 5 and 7 being driven with switching pulses output from a switching pulse generator 8, which generates the switching pulse synchronously with a vertical sync signal accompanying the video signal. The pulses 26 and 28, which have passed through the respective gate circuits 6 and 7, proceed further to subsequent gate circuits 9 and 10, respectively. The gate circuits 9 and 10, driven by an alternating switching-pulse generator 11, switch the pulses 26 and 28 alternately at predetermined time intervals of 0.05 seconds, so that the pulses 26 and 28 are applied to their respective pulse-form shaping circuits 12 and 13 alternately at the time intervals of 0.05 seconds. The pulse-form shaping circuit 12 blunts the form of the pulse 26 as shown by the reference numeral 27 in Fig. 2(E), while the pulse-form shaping circuit 13 equalizes the pulse-area of the pulse 28 to that of the blunted pulse 27. These two kinds of pulses are then united at an OR-gate circuit 14. As a result the OR-gate circuit 14 outputs a pulse train as shown in Fig. 6. This pulse train is mixed at a mixer 15 with a series of NTSC color video signals led thereto through a separate route 19. Because each component of the pulse train, coincides with each color burst signal in the video signals, the mixer 15 outputs a series of color video signals whose color burst signals are modified as shown in Fig. 7. These modified color video signals are finally recorded on a videotape through a recording head 16. The vertical synchro signal from the synchro signal separator 1 is used to drive a pulse generator 17. The output from the pulse generator 17 is recorded on the videotape through a CTL head 18.

Once color video signals have been recorded on a videotape in this way, it is no longer possible to copy the video signals to another tape by means of a conventional color video recorder because of the existence of the signals 27 and 29 added to the color burst signals which work to impair the function of the AGC circuit in the videotape recorder. However, it is no problem to reproduce the color video signals on a television picture screen because these signals 27 and 29 are filtered off at and by a chroma signal filter in the television set.

The time intervals at which the pulse signals 27 and 29 are alternately switched are not restricted to 0.05 seconds, but a suitable interval can be selected between 1000 seconds and a time corresponding to one horizontal scan.

There is a slightly modified vertion of the embodiment in which the timing pulse generator 3 is not used and in which the output from the timing pulse generator 2 is applied to both the pulse generators 4 and 5.

It is of course possible to apply the present invention to a monochrome video signal wherein the video signal is not accompanied by a color burst signal.

## Claims

1. A method of recording a composite video signal, comprising the steps of

separating the horizontal sync signals (21) from the composite video signal (A),

using the separated horizontal sync signals (21) to generate pulses of a predetermined shape (27, 29), each generated pulse of a predetermined shape being delayed so as to occur in the back porch associated with the respective horizontal sync signal (21), combining the delayed generated pulses (27, 29) with the composite video signal (A), and recording the combined signals (N);

characterised in that the generated pulses of predetermined shape comprise

first impairing pulses (29) each having a width greater than a predetermined portion of the back porch, and second impairing pulses (27) each having a width not greater than said predetermined portion of the back porch and an area substantially equal to the area of one of said first impairing pulses (29), and the first or second impairing pulses are selectively combined with the composite video signal over predetermined time intervals.

2. A method according to Claim 1 characterised in that the composite video signal (A) is a color video signal, the said portion of the back porch is the portion accupied by the color burst (22), each first impairing pulse (29) is delayed so as to extend over the duration of the respective color burst (22), and each second impairing pulse (27) is delayed so as to occur during the respective color burst (22).

3. Video signal recording apparatus comprising a sync signal separator (1) for separating the horizontal sync signals (21) from the composite video signal (A), pulse generating means (2, 3, 4, 5, 12, 13) arranged to receive the separated horizontal sync signals (21) and to generate in response thereto pulses (27, 29) of predetermined shape each delayed so as to occur in the back porch associated with the respective horizontal sync signal (21), means (14, 15) for combining the delayed generated pulses (27, 29) with the composite video signal (A), and means (16) for recording the combined signals (N) on a recording medium, characterised in that the pulse generating means comprises first impairing pulse generating means (3, 5, 13) for generating first impairing pulses (29) each having a width greater than a predetermined portion of the back porch, second impairing pulse generating means (2, 4, 12) for generating second impairing pulses (27) each having a width not greater than the predetermined portion of the back porch and an area substantially equal to the area of one of said first impairing pulses (29), and means (9, 10, 11) for alternately selectively enabling combination of the impairing pulses with the composite video signal.

4. Video signal recording apparatus according to Claim 3, characterised in that the first and second impairing pulse generating means each include a respective timing pulse generator (2, 3) arranged to generate a timing pulse (25) having a leading edge triggered by the leading edge of a horizontal sync signal (21), and a trailing edge coincident with the leading edge of the associated color burst signal (22), and means (4, 12, 5, 13) triggered by the trailing edge of the timing pulse (25) for developing the respective impairing pulses (27, 29).

5. Video signal recording apparatus according to Claim 4 characterised in that the means for alternately selectively enabling combination of the impairing pulses with the composite video signal comprise an alternating switching pulse generator (11) arranged to control respective gates (9, 10) in the means (4, 12, 5, 13) for developing the respective impairing pulses.

6. Video signal recording apparatus according to Claim 4 or 5, characterised in that the means (9, 10, 11) for alternately selectively enabling combination of the impairing pulses with the composite video signal are such that alternately either first or second impairing pulses are combined with the composite video signal during each of a succession of time intervals each of which is of a duration between the period of one horizontal scan and 1000 seconds.

## Patentansprüche

1. Verfahren zum Aufzeichnen eines zusammengesetzten Videosignals, zu dem die Schritte gehören, daß

die Horizontal-Synchronsignale (21) von dem zusammengesetzten Videosignal (A) abgetrennt werden,

daß die abgetrennten Horizontal-Synchronsignale (21) benutzt werden, um Impulse einer vorbestimmten Form (27, 29) zu erzeugen, wobei jeder erzeugte Impuls von vorbestimmter Form so verzögert wird, daß er in der hinteren Schwarzschulter auftritt, die zu dem betreffenden Horizontal-Synchronsignal (21) gehört,

daß die verzögerten erzeugten Impulse (27, 29) mit dem zusammengesetzten Videosignal (A) kombiniert und die kombinierten Signale (N) aufgezeichnet werden,

dadurch gekennzeichnet, daß zu den erzeugten Impulsen von vorbestimmter Form

erste Störimpulse (29) gehören, die jeweils eine größere Breite aufweisen als ein vorbestimmter Abschnitt der hinteren Schwarzschulter,

zweite Störimpulse (27), die jeweils eine Breite aufweisen, die nicht größer ist als der erwähnte vorbestimmte Abschnitt der hinteren Schwarzschulter, sowie eine Fläche, die im wesentlichen gleich der Fläche eines der erwähnten ersten Störimpulse (29) ist,

und daß die ersten oder zweiten Störimpulse selektiv mit dem zusammengesetzten Videosignal über vorbestimmte Zeitintervalle kombiniert werden.

2. Verfahren nach Anspruch 1, dadurch gekennzeichnet, daß das zusammengesetzte Videosignal (A) ein Farbvideosignal ist, daß der erwähnte Abschnitt der hinteren Schwarzschulter derjenige Abschnitt ist, den das Farbsynchronsignal (22) einnimmt, daß jeder erste Störimpuls (29) derart verzögert wird, daß er sich über die Dauer des betreffenden Farbsynchronsignals (22) erstreckt, und daß jeder zweite Störimpuls (27) derart verzögert wird, daß er während des betreffenden Farbsynchronsignals (22) auftritt.

3. Vorrichtung zum Aufzeichnen von Videosignalen, zu der ein Synchronsignalseparator (1) zum Abtrennen der Horizontalsignale (21) von einem zusammengesetzten Videosignal (A) gehört, Impulserzeugungseinrichtungen (2, 3, 4, 5, 12, 13), die so eingerichtet sind, daß sid die abgetrennten Horizontal-Synchronsignale (21) empfangen und als Reaktion darauf Impuls (27, 29) von vorbestimmter Form erzeugen, die jeweils verzögert sind, so daß sie in der zu dem betreffenden Horizontal-Synchronsignal (21) gehörigen hinteren Schwarzschulter auftreten, Einrichtungen (14, 15) zum Kombinieren der verzögerten erzeugten Impuls (27, 29) mit dem zusammengesetzten Videosignal (A) sowie Einrichtungen (16) zum Aufzeichnen der kombinierten Signale (N) auf einem Aufzeichnungsmedium, dadurch gekennzeichnet, daß zu den Impulserzeugungseinrichtungen erste Störimpulserzeugungseinrichtungen (3, 5, 13) gehören, um erste Störimpulse (29) zu erzeugen, die jeweils eine Breite haben, die größer ist als ein vorbestimmter Abschnitt der hinteren Schwarzschulter, zweite Störimpulserzeugungseinrichtungen (2, 4, 12) zum Erzeugen zweiter Störimpulse (27), die jeweils eine Breite haben, die nicht größer ist als der vorbestimmte Abschnitt der hinteren Schwarzschulter, sowie eine Fläche, die im wesentlichen der Fläche eines der erwähnten ersten Störimpulse (29) gleicht, sowie Einrichtungen (9, 10, 11) zum abwechselnden selektiven Kombinieren der störimpulse mit dem zusammengesetzten Videosignal.

4. Vorrichtung nach Anspruch 3, dadurch gekennzeichnet, daß die erste und die zweite Störimpulserzeugungseinrichtung jeweils einen Zeitsteuerimpulsgenerator (2, 3) aufweisen, der so eingerichtet ist, daß er einen Zeitsteuerimpuls (25) erzeugt, dessen Vorderflanke durch die Vorderflanke eines Horizontal-Synchronsignals (21) getriggert wird und dessen Hinterflanke mit der Vorderflanke des zugehörigen Farbsynchronsignals (22) zusammenfällt, sowie Einrichtungen (4, 12, 5, 13), die durch die Hinterflanke des Zeitsteuerimpulses (25) getriggert werden, um die betreffenden Störimpulse (27, 29) zu erzeugen.

5. Vorrichtung nach Anspruch 4, dadurch gekennzeichnet, daß zu der Einrichtung zum abwechselnden selektiven Kombinieren der Störimpulse mit dem zusammengesetzten Videosignal ein Wechselschaltimpulsgenerator (11) gehört, der so eingerichtet ist, daß er zugehörige Gatter (9, 10) in den Einrichtungen (4, 12, 5, 13) zum Entwickeln der betreffenden Störimpulse steuert.

6. Vorrichtung nach Anspruch 4 oder 5, dadurch gekennzeichnet, daß die Einrichtungen (9, 10, 11) zum abwechselnden selektiven Kombinieren der Störimpulse mit dem zusammengesetzten Videosignal so eingerichtet sind, daß abwechselnd entweder erste oder zweite Störimpulse mit dem zusammengesetzten Videosignal während je einer Folge von Zeitintervallen kombiniert werden, deren Dauer jeweils zwischen dem Zeitraum einer horizontalen Abtastung und 1000 Sekunden liegt.

## Revendications

1. Procédé pour enregistrer un signal vidéo composite, comprenant les étapes de

— la séparation des signaux de synchronisation horizontale (21) d'avec le signal vidéo composite (A);

— l'utilisation des tops (21) de synchronisation horizontale séparés pour engendrer des impulsions (27, 29) ayant une forme prédéterminée, chaque impuision engendrée à forme prédéterminée étant retardée pour se produire dans le palier arrière associé au top (21) de synchronisation horizontale respectif; la combinaison des impulsions engendrées retardées (27, 29) avec le signal vidéo composite (A); et l'enregistrement des signaux combinés (N); caractérisé en ce que les impulsions engendrées à forme déterminée comprennent:

des premières impulsions (29) d'altération dont chacune possède une largeur supérieure à une partie prédéterminée du palier arrière, et des deuxièmes impulsions (27) d'altération dont chacune possède une largeur non supérieure à ladite partie prédéterminée du palier arrière et une aire sensiblement égale à celle d'une desdites premières impulsions d'altération (29); et les premières ou deuxièmes impulsions d'altération sont sélectivement combinées avec le signal vidéo composite dans des intervalles de temps prédéterminés.

2. Procédé selon la revendication 1, caractérisé en ce que le signal vidéo composite (A) est un signal vidéo en couleurs, ladite partie du palier arrière est la partie occupée par le signal impulsionnel (22) de synchronisation de sous-porteuse, chaque première impulsion (29) d'altération est retardée de façon à se prolonger dans la durée du signal impulsionnel (22) de synchronisation de sous-porteuse respective et chaque deuxième impulsion (27) d'altération est retardée de façon à se produire pendant le signal impulsionnel (22) de synchronisation de sous-porteuse respective.

3. Appareil d'enregistrement de signaux vidéo, comprenant un séparateur (1) de tops de synchronisation servant à séparer les tops (21) de synchronisation horizontale, d'avec un signal vidéo composite (A), des moyens générateurs d'impulsions (2, 3, 4, 5, 12, 13) disposés de façon à recevoir les tops (21) de synchronisation horizontale séparés et d'engendrer, en réponse à ceux-ci, des impulsions (27, 29) ayant une forme prédéterminée dont chacune est retardée de façon à se produire dans le palier arrière associé au top respectif (21) de synchronisation horizontale, des moyens (14, 15) pour combiner les impulsions (27, 29) engendrées et retardées avec le signal vidéo composite (A), et des moyens (16) pour enregistrer les signaux combinés (N) sur un support d'enregistrement, caractérisé en ce que les moyens générateurs d'impulsions comprennent des premiers moyens (3, 5, 13) générateurs d'impulsions d'altération pour engendrer des premières impulsions (29) d'altération dont chacune possède une largeur supérieure à une partie prédéterminée du palier arrière, des deuxièmes moyens (2, 4, 12) générateurs d'impulsions pour engendrer des deuxièmes impulsions (27) d'altération dont chacune possède une largeur non supérieure à ladite partie prédéterminée du palier arrière et une aire sensiblement égale à celle d'une desdites premières impulsions d'altération (29), et des moyens (9, 10, 11) pour permettre, de façon sélective et alternée, la combinaison des impulsions d'altération avec le signal vidéo composite.

4. Appareil d'enregistrement de signaux vidéo selon la revendication 3, caractérisé en ce que les premiers et deuxièmes moyens générateurs d'impulsions d'altération incluent chacun un générateur respectif (2, 3) d'impulsions de commande rythmées, adapté à engendrer une impulsion de commande rythmée (25) présentant un front déclanché par celui d'un top (21) de synchronisation horizontale et une queue coïncidant avec celle du signal (22) impulsionnel de synchronisation de sous-porteuse, et des moyens (4, 12, 5, 13) déclanchés par la queue de l'impulsion de commande rythmée (25) pour produire les impulsions d'altération respectives (27, 29).

5. Appareil d'enregistrement de signaux vidéo selon la revendication 4, caractérisé en ce que les moyens pour permettre, de façon alternée et sélective, la combinaison des impulsions d'altération avec le signal vidéo composite comprennent un générateur (11) d'impulsions de commutation alternées, adapté à commander des portes respectives (9, 10) faisant partie des moyens (4, 12, 5, 13) pour produire les impulsions d'altération respectives.

6. Appareil d'enregistrement de signaux vidéo selon la revendication 4 ou 5, caractérisé en ce que les moyens (9, 10, 11) pour permettre, de façon alternée et sélective, la combinaison des impulsions d'altération avec le signal vidéo composite sont tels qu'alternativement les premières ou deuxièmes impulsions d'altération sont combinées avec le signal vidéo composite durant chacun des intervalles de temps se succédant, dont chacun a une durée comprise entre la période d'une exploration horizontale et 1000 secondes.

FIG. 1

FIG.2

22

24

23

21

(A)

(B)

21

(C)

25

26 (D)

27 (E)

28 (F)

29 (G)

FIG.3

0.05sec  0.05sec

FIG.4

0.05sec   0.05sec

(D)

(F)

FIG.5

0.05sec   0.05sec

(E)

(G)

# 0 084 241

## F I G. 6

## F I G. 7